(19) Europäisches Patentamt
European Patent Office
Office européen des brevets

(11) **EP 4 273 854 B1**

(12) **EUROPEAN PATENT SPECIFICATION**

(45) Date of publication and mention
of the grant of the patent:
**04.03.2026 Bulletin 2026/10**

(21) Application number: **21912494.8**

(22) Date of filing: **28.01.2021**

(51) International Patent Classification (IPC):
*G10L 13/02* (2013.01)      *G10L 13/047* (2013.01)
*G06N 3/04* (2023.01)       *G06N 3/047* (2023.01)
*G06N 3/08* (2023.01)       *G06N 3/084* (2023.01)
*G06N 3/088* (2023.01)      G10L 25/30 (2013.01)
*G06N 3/045* (2023.01)

(52) Cooperative Patent Classification (CPC):
**G10L 13/02; G06N 3/04; G06N 3/047; G06N 3/08;
G06N 3/084; G06N 3/088; G10L 13/047;**
G06N 3/045; G10L 25/30

(86) International application number:
**PCT/CN2021/074020**

(87) International publication number:
**WO 2022/141714 (07.07.2022 Gazette 2022/27)**

(54) **INFORMATION SYNTHESIS METHOD, ELECTRONIC DEVICE, AND COMPUTER READABLE STORAGE MEDIUM**

INFORMATIONSSYNTHESEVERFAHREN, ELEKTRONISCHE VORRICHTUNG UND COMPUTERLESBARES SPEICHERMEDIUM

PROCÉDÉ DE SYNTHÈSE D'INFORMATIONS, DISPOSITIF ÉLECTRONIQUE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2020 CN 202011624655**

(43) Date of publication of application:
**08.11.2023 Bulletin 2023/45**

(73) Proprietor: **Iflytek Co., Ltd.**
**Hefei, Anhui 230088 (CN)**

(72) Inventors:
• **HOU, Qiuxia**
**Hefei, Anhui 230088 (CN)**
• **LIU, Dan**
**Hefei, Anhui 230088 (CN)**

(74) Representative: **Prinz & Partner mbB**
**Patent- und Rechtsanwälte**
**Rundfunkplatz 2**
**80335 München (DE)**

(56) References cited:
EP-A1- 3 376 497          CN-A- 107 731 242
CN-A- 111 128 118         CN-A- 111 199 727
US-A1- 2015 186 359

• YUKIYA HONO ET AL: "Hierarchical Multi-Grained Generative Model for Expressive Speech Synthesis", ARXIV.ORG, CORNELL UNIVERSITY LIBRARY, 201 OLIN LIBRARY CORNELL UNIVERSITY ITHACA, NY 14853, 17 September 2020 (2020-09-17), XP081765725

EP 4 273 854 B1

**Description**

This application claims the priority to Chinese Patent Application No. 202011624655.8, titled "METHOD AND APPARATUS FOR SYNTHESIZING INFORMATION, ELECTRONIC DEVICE, AND COMPUTER-READABLE STORAGE MEDIUM", filed on December 30, 2020 with the China National Intellectual Property Administration.

**TECHNICAL FIELD**

The present disclosure relates to the technical field of machine learning, and in particular to a method and an apparatus for synthesizing information, an electronic device, and a computer-readable storage medium.

**BACKGROUND**

In recent years, human-computer interaction is becoming increasingly important duo to development of the information technology and a rise of the artificial intelligence. Among researches on the human-computer interaction, speech synthesis has become a hot spot throughout the world.

A process of traditional speech synthesis comprises three stages, i.e., front-end text analysis, parameter prediction, and a vocoder (or called a voice encoder). The front-end text analysis is mainly configured to predict speech features such as a pronunciation sequence and a prosodic boundary through text information. Generally, the front-end text analysis requires adequate text samples for learning a rule of pronunciation and predicting duration of pronunciation. The parameter prediction subsequent to the front-end text analysis is mainly configured to predict various speech parameters, and then input results of the prediction into the vocoder for sound synthesis. Thereby, a speech can be obtained.

Development of globalization and deepening of international communications render multilingual synthesis more and more important among information exchanges and human-computer interaction. Traditional speech synthesis mainly adopts a manner of front-end processing, that is, the front-end text analysis requires linguistic specialists for processing text. Scenarios of the multilingual synthesis require mastering of phoneme dictionaries and pronunciation rules of different languages. In the front-end text analysis, a lack of these phoneme dictionaries and pronunciation rules results in difficulties in modeling at an acoustic front-end. In such case, a manner of front-end-free processing becomes preferable in end-to-end (E2E) text-to speech (TTS) multilingual synthesis. That is, machine learning replaces the linguistic specialists for processing text.

Due to a lack of the manual pre-analysis, the front-end-free processing requires a large amount of data for training a system of speech synthesis. In conventional speech synthesis, the training data should have high sound quality, such that a model for speech synthesis would not suffer from poor-quality samples which results in inaccurate speech features and inaccurate pronunciation rules in the learning. As a manner of fact, it is difficult to obtain multilingual speech samples meeting the requirement of sound quality requirements. For some languages, the qualified speech samples eligible for synthesis may have total duration less than 1 hour, and only feasible way is using data having poorer recording quality. Such data usually comes from various sources, has a low signal-to-noise ratio, and is highly likely subject to pronunciation errors. Hence, a model for the E2E speech synthesis is apt to suffer from errors during the learning, which results in re-pronunciation, mispronunciation, slurred pronunciation, and missed pronunciation when using the model. EP3376497A1 discloses text-to-speech synthesis using an autoencoder. Data indicating a text for text-to-speech synthesis is obtained. Data indicating a linguistic unit of the text is provided as input to an encoder. The encoder is configured to output speech unit representations indicative of acoustic characteristics based on linguistic information, where the encoder is configured to provide speech unit representations learned through machine learning training. A speech unit representation that the encoder outputs is received. A speech unit to represent the linguistic unit is selected, the speech unit being selected from among a collection of speech units based on the speech unit representation output by the encoder. Audio data for a synthesized utterance of the text that includes the selected speech unit is provided. YUKIYA HONO et al. discloses in "Hierarchical Multi-Grained Generative Model for Expressive Speech Synthesis" ARXIV.ORG, CORNELL UNIVERSITY LIBRARY, 201 OLIN LIBRARY CORNELL UNIVERSITY ITHACA, NY 14853, 17 September 2020 (2020-09-17) a hierarchical generative model with a multi-grained latent variable to synthesize expressive speech. The proposed framework models fine-grained latent variables considering the dependence on input text, hierarchical linguistic structure, and temporal structure of latent variables. The framework consists of a multi-grained variational autoencoder (VAE), a conditional prior, and a multi-level auto-regressive latent converter. The proposed model can appropriately sample fine-grained latent variables without reference speech and provides controllability of speaking style, resulting in more expressive synthesized speech.

Therefore, how to utilize speech data of a small amount and low recording quality to achieve an efficient and accurate solution of front-end-free speech synthesis is an urgent technical problem to be solved by those skilled in the art.

## SUMMARY

In view of the above, a method (claim 1) for synthesizing information, an electronic device (claim 13), and a computer-readable medium (claim 14) are provided according to the present invention. An efficient and accurate solution of front-end-free speech synthesis is achieved by utilizing speech data of a small amount and low recording quality.

The aspects of the invention are set out in the above referred independent claims, preferable aspects are defined by the dependent claims.

## BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is a schematic flow chart of a method for synthesizing information according to an embodiment of the present disclosure.

Figure 2 is a schematic flow chart of a method for synthesizing information according to another embodiment of the present disclosure.

Figure 3 is a schematic flow chart of a method for synthesizing information according to another embodiment of the present disclosure.

Figure 4 is a schematic diagram of signal flows during training a first decoder, a second decoder, and a first encoder according to an embodiment of the present disclosure.

Figure 5 is a schematic diagram of signal flows during synthesizing information using a trained first decoder, a trained second decoder, and a trained first encoder according to an embodiment of the present disclosure;

Figure 6 is a schematic diagram of signal flows of a method for synthesizing information in an application scenario of speech synthesis according to an embodiment of the present disclosure.

Figure 7 is a schematic flowchart of a method for synthesizing information according to another embodiment of the present disclosure.

Figure 8 is a schematic structural diagram of an apparatus for synthesizing information according to an embodiment of the present disclosure.

Figure 9 is a schematic structural diagram of an apparatus for synthesizing information according to another embodiment of the present disclosure.

Figure 10 is a schematic structural diagram of an apparatus for synthesizing information according to another embodiment of the present disclosure.

## DETAILED DESCRIPTION OF THE EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The relationship terms such as "first", "second" and the like are only used herein to distinguish one entity or operation from another, rather than to necessitate or imply that an actual relationship or order exists between the entities or operations. Furthermore, the terms such as "include", "comprise" or any other variants thereof means to be non-exclusive. Therefore, a process, a method, an article or a device including a series of elements include not only the disclosed elements but also other elements that are not clearly enumerated, or further include inherent elements of the process, the method, the article or the device. Unless expressively limited, the statement "including a..." does not exclude the case that other similar elements may exist in the process, the method, the article or the device other than enumerated elements.

Some terms used herein are introduced first.

An encoder refers to an encoding side of an autoencoder structure, and is configured to map an input of the autoencoder structure into a code (also called a hidden variable or a hidden representation).

A decoder refers to a decoding side of the autoencoder structure, and is configured to map the code to an output of the autoencoder structure. Generally, the output is a reconstruction of the input at the encoding side to some extent.

The Tacotron model is a conventional model for end-to-end speech synthesis, and is based on an attention mechanism. The Tacotron model is capable of generating a speech directly from text.

The BERT model refers to a model of bidirectional encoder representations from transformers, and is a model using deep bidirectional unsupervised language representation and pre-rained only based on a corpus of plain text. The BERT module belongs to the field of pre-training based on natural language processing, and is proposed by the Google Inc. in 2018. A main purpose of BERT is to understand semantics of a sentence serving as a user's query and to extract prosodic information contained in text.

The VAE model refers to the conditional variational autoencoder, and is a generative model based on the autoencoder structure. The VAE model has a strong assumption on distribution of the hidden variable(s), adopts a variation approach to learn the hidden variable(s), and thereby introduces an additional loss component and the SGVB (stochastic gradient variational Bayes) estimator into a training function.

In a first aspect, a method for synthesizing information is provided according to embodiments of the present disclosure. In this embodiment, the method is applicable to an auto-encoder network, which comprises models of a first encoder, a second encoder, and a first decoder. The auto-encoder network may be implemented in hardware, software, or a combination of both. For example, the auto-encoder network may be in a hardware environment comprising a server and a terminal, the server and the terminal are connected via a network, and the network includes is but not limited to a local area network, a metropolitan area network, or a wide area network. The encoders and the decoder as mentioned above may be implemented as software running on the server and the terminal, or as instructions embedded in hardware on the server and the terminal. Alternatively, the encoders and decoders may operate only on the server or only on the terminal, which is not limited in this embodiment.

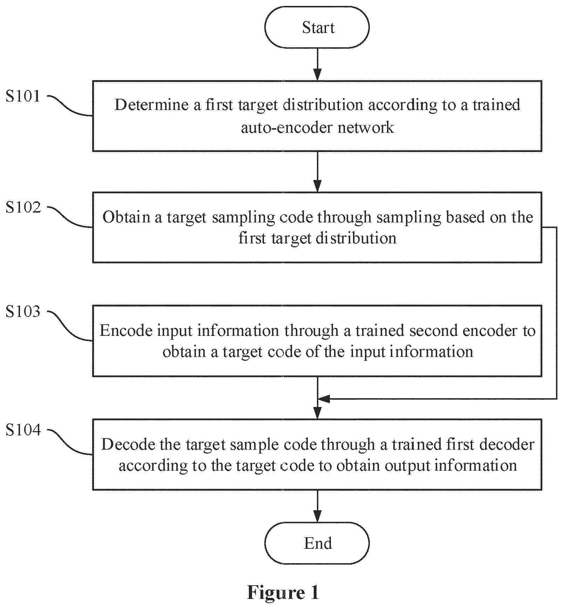

Hereinafter the method for synthesizing information is further described in conjunction with steps as shown in Figure 1. Figure 1 is a schematic flow chart of a method for synthesizing information according to an embodiment of the present disclosure. As shown in Figure 1, the method for synthesizing information comprises following steps S101 to S104.

In step S101, a first target distribution is determined according to a trained auto-encoder network which is obtained through training the auto-encoder network. The first target distribution characterizes a posterior distribution and is a probability distribution of an output of the first encoder given an input of the first encoder. When training the auto-encoder network, samples inputted into the first encoder are in one-to-one correspondence to samples inputted into the second encoder, and a prior distribution determined by the second encoder is for predicting the first target distribution.

In this step, the first target distribution is obtained from the trained auto-encoder network. Generally, the first target distribution can be obtained from the first encoder in the auto-encoder network, and may alternatively be obtained from the second encoder. Each of the first encoder and the second encoder may be an artificial neural network model, and may comprise, for example, one or more convolutional layers and/or one or more pooling layers for extracting features from information inputted into the encoder. In such case, the first target distribution may be regarded as a distribution of the features extracted by the encoder, and a specific form of the first target distribution is determined by a specific model of the first encoder and/or the second encoder.

The first target distribution may be of a preset type. For example, the preset distribution is a normal distribution (also called the Gaussian distribution), and parameters which are obtained may comprise a mean and a standard deviation of the normal distribution, or the mean and the standard deviation of the normal distribution may be calculated from the parameters which are obtained. It appreciated that the preset type may be another distribution type, as long as an expression related to such type can be determined from the first encoder and/or the second encoder. Generally, the first target distribution is a multi-dimensional distribution.

A process of training the auto-encoder network comprises training the first encoder and the second encoder. That is, parameters of the first encoder and of the second encoder are iteratively adjusted in such process. During the training, the samples inputted into the first encoder are in one-to-one correspondence to the samples inputted into the second encoder, such that output information generated by the auto-encoder network in subsequent reconstruction corresponds to input information of the second encoder. The first encoder may encode its input samples to extract features from these input samples, and a conditional probability of the extracted features given the input samples characterizes the posterior distribution which depends on the model of the first decoder, that is, the posterior distribution is characterized by a probability distribution of the output of the first encoder given the input of the first encoder. Herein the conditional probability represents a probability of obtaining a specific feature (or a specific type of features) given a specific sample (or a specific type of samples) inputted into the first encoder, and reflects a relationship between the input and the output of the first encoder. The second encoder may encode its input samples to extract features from these input samples, and these features follow the prior distribution which is determined by these input samples and parameters of the second encoder. During the training, the first target distribution is predicted through the second encoder, that is, the parameters of the first encoder and of the second encoder are iteratively adjusted to approximate the foregoing prior distribution and the foregoing posterior distribution, for example, to render the two distributions as identical as possible. It is noted that the term "as identical as possible" may refer that during the training, a difference between the two distributions is smaller than a certain threshold, that the difference reaches a minimum within a specific interval, or that the difference is a minimum among a certain quantity of iterations. A specific manner of implementation is not limited herein, and may be determined according to an actual requirement in application.

After the training, the first target distribution can be determined according to the trained first encoder and/or the trained second encoder. In this step, the first target distribution determined from the training may obtained based on the final parameters of the first encoder and of the second encoder.

In an embodiment, the first encoder model is a VAE model. The first encoder model may alternatively be another encoder model comprising a neural network layer, which is not limited herein.

In step S102, a target sampling code is obtained through sampling based on the first target distribution.

After the first target distribution is obtained in the step S101, random sampling may be performed based on the first target distribution to obtain sample code(s). It is appreciated that a parameter of the first target distribution, such as a mean, may also be directly used to obtain the target sampling code. For example, the sampling is performed directly based on the parameter to obtain the target sample code. It is appreciated that when the first target distribution is a multi-dimensional distribution, the obtained sampling code is a vector.

In step S103, input information is encoded through a trained second encoder, which is obtained through training the second encoder, to obtain a target code of the input information.

The input information is inputted into the second encoder, thereby enabling the second encoder to encode the input information. The second encoder may be an artificial neural network model, which may comprise, for example, one or more convolutional layers and/or one or more pooling layers. In such case, a process of encoding the input information may be regarded as a process of extracting features from the input information. In an example (not encompassed by the wording of the claim), the input information is a speech, and sound features such as prosody, pauses, and a fundamental frequency of a sound may be extracted from the speech. According to the invention claimed, the input information is text, and text features such as sentence segments, word segments, and semantics of the text can be extracted from the text. In another example (not encompassed by the wording of the claims), the input information is an image, and image features such as a shape, a color, and a specific target object in the image can be extracted from the image. The obtained target code is capable to reflect information of extract feature(s), such as strength of extracted features.

In an embodiment, the second encoder model is a BERT model. In such case, the input information is text.

An order of obtaining the target sampling code and obtaining the target code is not limited herein. That is, an order of executing the steps S101,

S102 and S103 is not limited. In an embodiment, the target code is obtained after the target sampling code is obtained, that is, the steps S101 and S102 are performed before the step S103. In another embodiment, the target sampling code is obtained after the target code is obtained, that is, the step S103 is performed before the steps S101 and S102. In another embodiment, the target sampling code and the target code may be simultaneously obtained, that is, the step S103 is performed simultaneously with the steps S101 and S102.

In one embodiment, the target code of the input information may be obtained first, and then the target code is inputted into a fully connected layer to obtain the parameters of the first target distribution. Thereby, the first target distribution is obtained through fitting the parameters of the first target distribution, and sampling is performed based on the first target distribution to obtain the target sample code. Alternatively, the first target distribution may be obtained directly based on the target code, and the sampling is performed based on the first target distribution to obtain the target sample code.

In step S104, the target sample code is decoded through a trained first decoder, which is obtained through training the first decoder, according to the target code to obtain speech output information.

After being obtained, the target code and the target sample code are inputted into the first decoder for decoding. An object of decoding is the target sampling code obtained through sampling based on the first target distribution, and the first target distribution characterizes the posterior distribution of the output of the first encoder given the input of the first decoder. Hence, the speech output information is actually a new sample reconstructed by the first decoder with reference to the samples inputted into the first encoder during the training, and the new sample is of the same type as the sample inputted into the first encoder during the training. Moreover, decoding according to the target code means that the target code serves as a condition restricting the decoding, and the target code is obtained through the second encoder encoding the input information. Hence, the output information is constrained by the input information, that is, corresponds to the input information. Since the input samples of the first encoder are in one-to-one correspondence to those of the second encoder during the training, and the prior distribution through encoding by the second encoder is used to predict the first target distribution, the correspondence between the output information obtained through the decoding and the input information is a good approximation (or a good simulation) of the correspondence between the input samples of the first encoder and the input samples of the second encoder during the training. That is, the obtained output information corresponds to the input information well.

Herein the foregoing method for synthesizing information is applied to speech synthesis. The input information is text, and the output information is a speech. Correspondingly, the first encoder and the second encoder may serve as an encoding side of a vocoder, and the first decoder serves a decoding side of the vocoder. During the training, speech samples and text samples which are in one-to-one correspondence may be inputted into the first encoder and the second encoder to extract speech features and text features, respectively. The prior distribution of text features obtained by the second encoder is for predicting the posterior distribution of the speech features given the speeches, such that through the trained auto-encoder network, the first target distribution and the distribution of text features approximate each other.

In traditional end-to-end (E2E) speech synthesis solutions, such as the Tacotron model, the speech synthesis based on an attention mechanism would suffer from noises in speech samples, thereby puts a high requirement on recording quality, limits a quantity of eligible training samples, and eventually affects a result of the training. Herein the text samples has no speech noises, and hence using the prior distribution of the text features to predict the first target distribution during the training can effectively prevent the noises in the speech samples from affecting with the finally generated speech. Thereby, a high-quality speech can be synthesized. Accordingly, a restriction on quality of the speech samples can be lessened for the training in order to obtain a large quantity of training samples. As a result, the speech generated by the trained model has better performances in prosody, pauses, and text-based pronunciation. Since multilingual speech synthesis has a strong dependence on quality of samples for each language, the foregoing advantage is more apparent in the multilingual speech synthesis.

In an embodiment, the first encoder and the first decoder serves as an encoding model and a decoding model of a VAE model, and an encoding result of the second encoder can serve as a label for constraining the decoding of the first decoder. That is, the first encoder, the second encoder, and the first decoder form a conditional VAE (CVAE) structure as a whole.

In an embodiment, the second encoder is a BERT model. Conventional front-end-free speech synthesis solutions utilize a model having simple front-end processing, such as the Tacotron model, and such model often uses convolutional layers and long short-term memory networks. Such simple structure may work well when phonemes or manually extracted text features serve as front-end inputs, but can only reply on audios of hundreds of hours and corresponding text as training samples when there is no front end, thereby having difficulties in understanding semantics of the text and capturing prosodic information of sentences. In comparison, the BERT model can be pre-trained with a large amount of text and achieve high scores in multilingual text analysis, especially in semantic understanding, semantic representation, and other tasks. Thereby, the BERT model used herein can address deficiencies of the conventional front-end-free speech synthesis solutions well.

In summary, the method for synthesizing information (synthesizing an output speech information from an input text information) is provided herein. The first target distribution is determined according to the trained auto-encoder network, and the target sample code is obtained through sampling based on the first target distribution. The input information is encoded through the trained second encoder to obtain the target code of the input information. The target sample code is decoded through the trained first decoder using the target code as a decoding condition to obtain the output information. During the training, samples inputted into the first encoder are in one-to-one correspondence to samples inputted into the second encoder, and the second encoder predicts the first target distribution. Thus, correspondence between the output information obtained through the decoding and the input information can highly approximate (or simulate) correspondence between the samples inputted into the first encoder and the samples inputted into the second encoder during the training, such that the obtained output information has a good correspondence to the input information. Thereby, a restriction on quality of speech samples is lessened in speech synthesis, especially in multilingual speech synthesis. A large number of training samples is eligible, and hence a final synthesized speech has better performances in prosody, pauses, and text-based pronunciation.

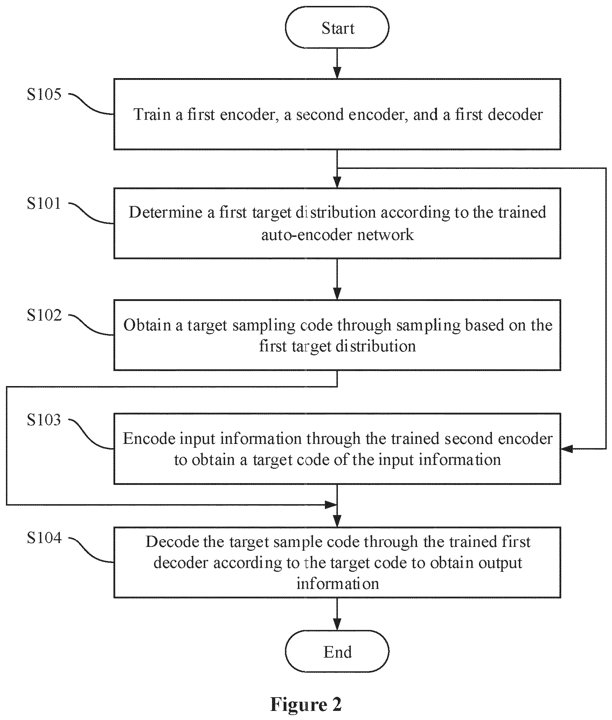

Figure 2 is a schematic flowchart of a method for synthesizing information according to another embodiment of the present disclosure. On a basis of the process as shown in Figure 1, the method further comprises a following step S105.

In step S105, the first encoder, the second encoder, and the first decoder are trained to obtain a trained first encoder, the trained second encoder, and the trained first decoder, respectively.

The description concerning the step S101 indicates that the auto-encoder network may be trained before being applied to information synthesis. Generally, an objective of the training is learning mapping functions of networks for encoding and decoding, so as to find a better or optimal codec network. In a general training process, the training samples are inputted into the auto-encoder network, and parameters of the first encoder, the second encoder and the first decoder are iteratively adjusted according to a training objective until the auto-encoder network meets a preset condition related to the training objective.

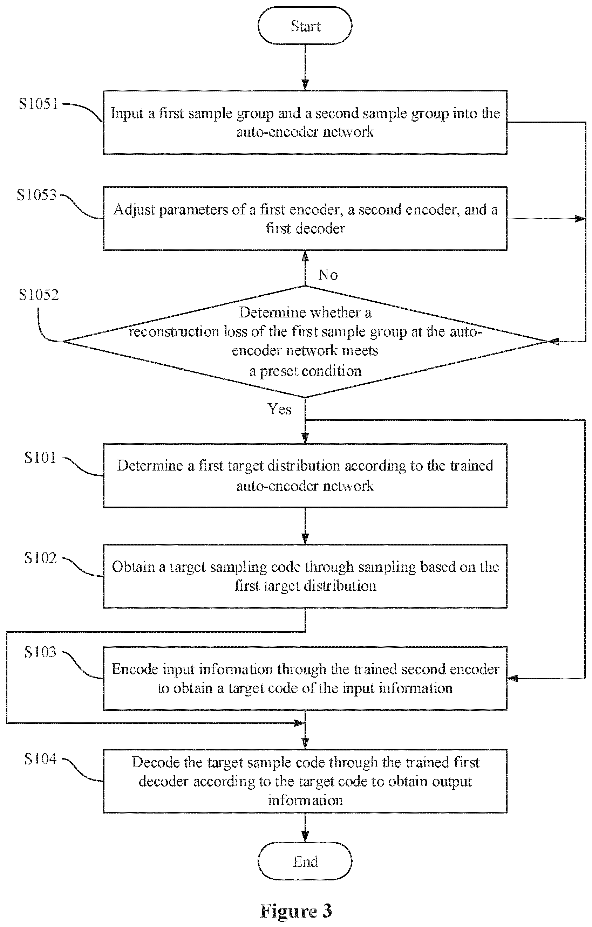

In an embodiment, the training objective is set as reducing a reconstruction loss, that is, a loss of the auto-encoder network reconstructing samples. Correspondingly, the foregoing preset condition refers to that the reconstruction loss meets a preset condition. As shown in Figure 3, the step S105 may comprise the following steps S1051 to S1053.

In step S1051, a first sample group and a second sample group are inputted into the auto-encoder network. The first sample group comprises first samples, each of which is of a same type as the output information. The second sample group comprises second samples, each of which is of a same type as the input information. The second samples are in one-to-one correspondence with the first samples.

A function of each part (such as the first encoder, the second encoder, and the first decoder) of the auto-encoder network in the information synthesis is similar to that of such part in the training. Types of information at an input and an output of each part are also identical in the two processes. Therefore, the second samples inputted into the second encoder during the training have the same type as the input information inputted into the second encoder during the information synthesis. During the information synthesis, the input of the first encoder may not be directly used, and the decoding side (i.e., the first decoder) of the auto-encoder network decodes the target sample code to obtain the output information, which is essentially a process of simulating the input of the first encoder and reconstruct a new sample. Hence, the new sample (i.e., the output information) needs to be similar to pseudo samples inputted into the first encoder, that is, of a same type as these samples. According to the claimed invention, the new sample and the pseudo samples are speeches. Therefore, during the training, the first samples inputted into the first encoder also need belong to such type, so that the auto-encoder network can reconstruct the first sample group.

In step S1052, it is determined whether the reconstruction loss of the first sample group at the auto-encoder network meets a preset condition. In case of meeting the preset condition, the process proceeds to the steps S101 to S104 as described in the foregoing embodiment. In case of not meeting the preset condition, the process proceeds to step S1053.

In step S1053, parameters of the first encoder, the second encoder, and the first decoder are adjusted. Afterwards, the process returns to the step S1052 for determination.

In an embodiment, the preset condition is set as the reconstruction loss reaching a minimum. Herein the minimum value may be the minimum of the reconstruction loss throughout a whole parametric space for a part of parameters of the first encoder, the second encoder, and the first decoder. Alternatively, the minimum value may be the minimum of the reconstruction loss within a partial value-space for a part of parameters of the first encoder, the second encoder, and the first decoder. Alternatively, the minimum value may be the minimum obtained within a preset quantity of iteration steps. A specific content is not limited herein, and may be determined to an actual application scenario.

In an embodiment, the preset condition is set as the reconstruction loss being less than (or being less than or equal to) a preset value. That is, it is determined that the preset condition is met and the training can terminate, as long as the reconstruction loss decreases to a certain threshold.

Thus, the steps S1052 and S1053 as a whole achieve iterative adjustment on the parameters of the first encoder, the second encoder, and the first decoder model until the reconstruction loss of the first sample group at the auto-encoder network meets the preset condition.

In practice, information synthesis in multiple application scenarios of may be similar. In such case, the auto-encoder network may be trained only in the first time of information synthesis, and the trained auto-encoder network is directly used in the subsequent synthesis. In addition, the parameters of the trained first encoder, second encoder, and first decoder for a specific type of application scenarios may be recorded, and the parameters are directly loaded in information synthesis corresponding to such type without repeated training. That is, in an embodiment as shown Figure 1, the parameters of the first encoder, the second encoder, and the first decoder may refer to a result of pre-training and thus have been adjusted to a state that meets a requirement of application at a beginning of the information synthesis. In such case, the step S105 is not necessary.

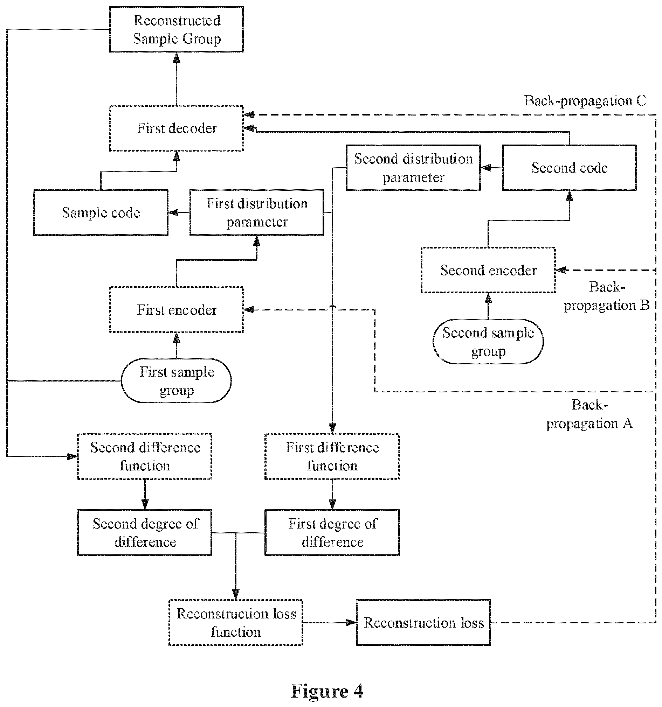

The reconstruction loss is an indicator in the training, and is for determining whether the training can terminate. In an embodiment, the reconstruction loss may be obtained through following steps. Reference is made to Figure 4, which is a schematic diagram of signal flows during training the first decoder, the second encoder, and the first encoder according to an embodiment of the present disclosure. The solid arrows in Figure 4 indicate signal flows for obtaining the reconstruction loss from the first sample group and the second sample group. The dotted arrows in Figure 4 indicate signal flows for adjusting the first decoder, the second encoder, and the first encoder according to a feedback of the reconstruction loss. The solid boxes represent parameters (such as a scalar, a vector, a matrix, or the like) in signal flows schematically. The dotted boxes represent operations on the parameters (e.g., through a functions, a model, or the like).

Reference is made to a part of the solid arrows in Figure 4, that is, a process of obtaining the reconstruction loss. First, a first distribution parameter is determined through the first encoder according to all first samples. The first distribution parameter is configured to characterize a first distribution (a first probability distribution) of first codes, which are obtained by encoding the first samples, respectively. Herein the first distribution may be regarded as an intermediate state of the first target distribution during the training. Similarly, the first distribution characterizes the posterior distribution and is a probability distribution of the first codes given the first samples, and generally the first distribution is of a preset distribution type. In practice, the first encoder may encode each first sample first to obtain the first code representing such first sample, and then determine the first distribution parameter of such posterior distribution according to the first code of each first sample. In an embodiment, the first distribution parameter may be obtained according to the first codes through one or more fully connected layers embedded in the first encoder. When the first distribution parameter comprises multiple elements (such as mean, variance, or the like.), each fully connected layer may be configured to obtain one of these elements. Generally, the first distribution is a multidimensional distribution, and a dimension of the first distribution depends on a quantity of the first samples in the first sample group (or, a quantity of the second samples in the second sample group).

After the first distribution is obtained, subsequent steps are similar to those in the information synthesis. First, sample codes for all first samples are obtained through sampling based on the first distribution. In one embodiment, the sampling codes may be obtained through acquiring the first distribution parameter. For example, there are M first samples in the first sample group, and each sample is encoded by the first encoder to obtain a code element. In such case, it is assumed that the first distribution is an M-dimensional normal distribution, and each dimension k ($1 \leq k \leq M$) has two parameters of a mean $\mu_k$ and a variance $\Sigma_k$. The coding element $c_k$ may be obtained through sampling based on $\mu_k$ and $\Sigma_k$ of each dimension, and the sample codes for the first samples are $\{c_1, c_2, ... c_M\}$. Such example is only for illustrating a process of obtaining the sample codes, and the present disclosure is not limited thereto. Besides obtaining the sample codes for the first samples, the second sample group is encoded through the second encoder to obtain second codes of the second samples. Then, a second distribution parameter is obtained according to the second codes. In one embodiment, the second distribution parameter may be obtained according to the second codes through one or more fully connected layers embedded in the second encoder. When the second distribution parameter comprises multiple elements (such as a mean, a variance, or the like), each fully connected layer may be configured to obtain one of these elements. The second distribution parameter is configured to characterize a second distribution (a second probability distribution) of the second codes. The second codes of the second samples correspond to the first codes of the first samples, respectively. Herein the second codes represent features extracted from the second samples by the second encoder. The second distribution is directly determined from the second samples, and is essentially a prior distribution of the second codes. Afterwards, the first decoder decodes the sample code for each first sample by using the second code of the second sample, which corresponds to such first sample, as a condition, so as to obtain a reconstructed sample of the first sample. The reconstructed samples of the first samples form a reconstructed sample group.

In order to implement a good restriction of the input information on the output information during the information synthesis, the first target distribution should be predicted by using the second distribution. Hence, the second codes of the second samples should correspond to the first codes of the first samples, respectively. For example, the first samples and the second samples are speech samples and text samples that correspond to each other respectively. In such case, a component representing inter-sentence pauses in the first code may correspond to a component representing sentence divisions in the second code.

Then, the reconstruction loss is calculated. First, a first degree of difference between the first distribution and the second distribution is obtained based on the first distribution parameter and the second distribution parameter. An important objective of the training is that the second distribution can predict the final first distribution (that is, the first target distribution) well, so that a difference between the two distributions is an important factor for evaluating a result of the training. Herein the first degree of difference may be calculated through a first difference function, and the calculation comprises but is not limited to calculating a difference, calculating a mean square error between distribution parameters, calculating a relative entropy, calculating a cross entropy, or the like. A specific form of the calculation is not limited herein, as long as the difference between the two distributions can be reflected.

Additionally, a second degree of difference between the first sample group and the reconstructed sample group is obtained based on the first sample group and the reconstructed sample group through a second difference function. An important objective of the first decoder is to generate a new sample similar to the first sample as much as possible, so that a degree of restoration after the reconstruction is also an important factor for evaluating the reconstruction loss. The second degree of difference here may be calculated through the second difference function. A form of the calculation includes but is not limited to calculating a difference, calculating a mean square error between distribution parameters, or the like. A specific form of the calculation is not limited herein, as long as the difference between the two sample groups can be reflected.

Finally, the reconstruction loss is obtained based on the first degree of difference and the second degree of difference. That is, both the difference between the first distribution and the second distribution and the difference between the first sample group and the reconstructed sample group need to be considered in the reconstruction loss. Herein the reconstruction loss may be calculated through a reconstruction loss function. A form of the calculation includes but is not limited to addition, multiplication, weighting sum, exponential operation, or the like. A specific form of the calculation is not limited herein, as long as the reconstruction loss is in positive correlation with both the first degree of difference and the second degree of difference.

In an embodiment, the first distribution and the second distribution may be of the same type, in order to facilitate calculating the first degree of difference. For example, both the first distribution and the second distribution are normal distributions. The first distribution parameter may comprise the mean and the variance of the first distribution, and the second distribution parameter may comprise the mean and the variance of the second distribution.

Reference is further made to a part of the dotted arrows in Figure 4, that is, a process of feeding back the reconstruction loss. During the feedback, the reconstruction loss may be simultaneously returned to the first encoder (feedback A), the second encoder (feedback B), and the first decoder (feedback C). Feedback A, feedback B, and feedback C may be identical or different, that is, the reconstruction loss may be fed back under a same form or may be fed back in different forms (for example, returning different parts of the reconstruction loss function, or returning results of difference calculations which are based on the reconstruction loss). Since the training is an iterative process, each time it is determined that the calculated reconstruction loss does not meet the preset conditions, it is necessary to determine how to adjust the auto-encoder network based on the calculated reconstruction loss. In an embodiment, the feedback is implemented through back-propagating a gradient of the reconstruction loss, that is, a variation gradient of the reconstruction loss is obtained based on the reconstruction loss obtained in current iteration and that obtained in last iteration, and such gradient is fed back to the auto-encoder network as a basis for adjusting the parameters of the first encoder, the second encoder, and the first decoder.

Herein a decrease of the reconstruction loss may result from a decrease in the first degree of difference. Since parameters of the first encoder and parameters of the second encoder may both be adjusted according to the returned gradient, the decrease of the first degree of difference is essentially a process in which the first distribution and the second distribution approximate each other, that is, a process in which the posterior distribution characterized by the probability distribution of the first codes given the first sample group and the prior distribution of the second codes of the second sample group approximate each other. As discussed above, an essential objective of information synthesis is reconstructing the output information, which is similar to the first samples, under control of the input information, and hence an objective of the training is enabling the auto-encoder network to learn information of the posterior distribution from the first sample group as much as possible under a constraint of the prior distribution. Therefore, in a case that the prior distribution restricts the posterior distribution too much during the training (that is, the first distribution changes a lot toward the second distribution while the second distribution changes little toward the first distribution), little information are learned because the final posterior distribution has an excessive "bias" toward the prior distribution.

In order to address the above issue, in one embodiment, the gradient may be back-propagated after processing the reconstruction loss. For example, the reconstruction loss may be divided into a first part and a second part. The first part of the reconstruction loss is not back-propagated (i.e., gradient breaking) to the second distribution (that is, for the parameters of the second decoder), that is, the first part of the reconstruction loss does not affect adjustment on the parameters of the second decoder. The second part of the reconstruction loss is not back-propagated (i.e., gradient breaking) to the first distribution (that is, for the parameters of the first decoder), that is, the second part of the reconstruction loss does not affect adjustment on the parameters of the first decoder. In such case, a degree of the first distribution approximating the second distribution and a degree of the inverse approximation can be controlled through weights of the first part and the second part in the reconstruction loss. Generally, a weight of the first part in the reconstruction loss is configured to be larger than that of the second part, so as to prevent the first distribution from approaching the second distribution blindly and failing to learn useful information from the first sample group.

After the training, that is, after the reconstruction loss meeting the preset condition is obtained, the trained first encoder, the trained second encoder, and the trained first decoder re obtained. Then, the information synthesis described in the steps S101 to S104 may be performed. Herein the first distribution parameter may be determined based on the parameters of the trained first encoder and/or the trained second encoder. Additionally or alternatively, the first distribution parameter may be determined based on inputs of the trained first decoder and/or the second trained encoder. The final first distribution in the training can serve as the first target distribution.

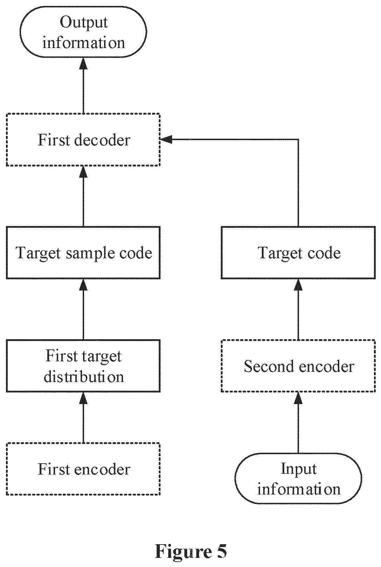

Corresponding to the training process as shown in Figure 4, Figure 5 is a schematic diagram of signal flows synthesizing information using a trained first decoder, a trained second decoder, and a trained first encoder according to an embodiment of the present disclosure. As shown in Figure 5, during the information synthesis, the first target distribution is determined according to the trained auto-encoder network (e.g., according to the trained first encoder as shown in Figure 5), and then sampling is performed based on the first target distribution to obtain the target sample code. For example, the first distribution is a normal distribution, hence the first target distribution is also a normal distribution, and the target sampling code is obtained by sampling based on the normal distribution. The target sample code may be regarded as the first code obtained though encoding a "pseudo" first sample by the first encoder, or as a code sampled by the trained first encoder. Features of the target sample code may refer to the foregoing description concerning the first code and the target sample code, which is not repeated herein. Figure 5 shows that the first target distribution is obtained from the parameters of the trained first decoder. Alternatively, since the first distribution and the second distribution has been approximated to each other to an extent meeting a preset requirement after the training, the first target distribution may be obtained based on the trained second encoder, which has a similar result. For example, text is inputted into the second encoder, and the second encoder obtains a text code, and parameters of the first target distribution are obtained by the feeding the text code into a fully connected layer. In such case, the first target distribution is obtained through fitting the parameters of the first target distribution.

Additionally, the trained second encoder encodes the input information to obtain a target code corresponding to the input information. Then, both the target code and the target sample code are input to the second decoder, so that the second decoder decodes the target sample code using the target code as a condition to obtain the output information. For example, the second decoder corresponds to a decoding side of the CVAE, and the target code may serve as a label when participating in the decoding. The output information corresponds to the input information in one aspect, and is new information similar to and of the same type as the first samples in another aspect. Hence, the auto-encoder network implements a process of information synthesis.

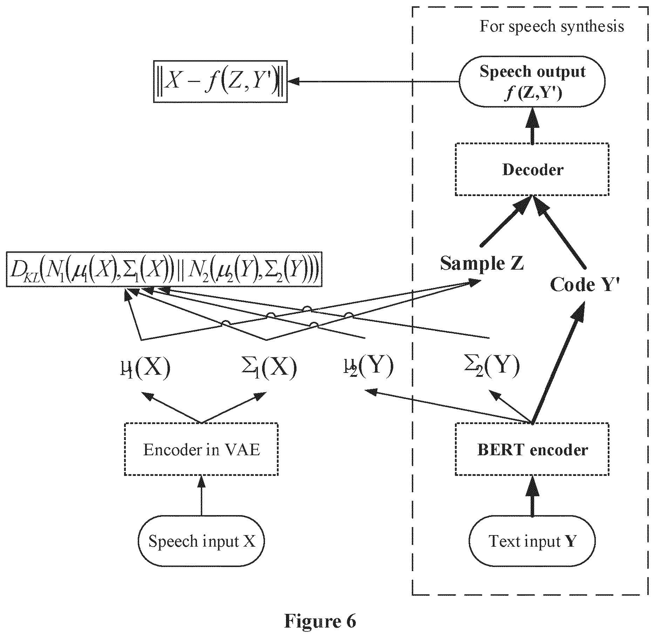

In order to facilitate clear understanding of the foregoing method for synthesizing information, hereinafter an application scenario of speech synthesis is taken as an example to illustrate an embodiment of the present disclosure. Figure 6 is a schematic diagram of signal flows of a method for synthesizing information in an application scenario of speech synthesis according to an embodiment of the present disclosure. In this embodiment, both the input information and the second samples are information of a text type, that is, text input Y. Both the output information $f(z,Y')$ and the first samples are information of a speech type, that is, the first sample is speech input X. The auto-vocoder network adopts the Tacotron decoding framework and the Transformer encoding framework. Specifically, the first encoder is set as an encoder in a VAE, the second encoder is set as a BERT encoder, and the first decoder is set as a decoder in the VAE. The first decoder forms a CVAE structure along with the encoder in the VAE and an output of the BERT encoder. In the foregoing structure, the VAE encoder is mainly for enhance a prosody and improve stability in the speech synthesis, and the BERT encoder is mainly for understanding semantics of text and capturing a literal prosody in the text.

First, a training process in Figure 6 is illustrated. In this embodiment, it is not necessary to input phonemes and manually extracted text features into the first encoder and the second encoder when training the auto-encoder network. Only the first samples and the second samples in a one-to-one correspondence, i.e., text-speech sample pairs <y,x>, need to be inputted. y refers to inputted text (i.e., the second sample in the second sample group Y), and x refers to an inputted speech (i.e., the first sample in the first sample group X). A form of x may be a speech waveform file (wave file) or a fundamental-frequency cepstrum feature extracted from the wave file.

Herein the encoder in the VAE determines the first distribution parameter based on X, and thereby determines the posterior distribution characterized by a probability distribution $Q(Z|X)$ of the first codes given the first samples. Z represents hidden representation of X after processing of the encoder in the VAE, that is, the first codes Z may be expressed as $Z = VAE_{encoder}(X)$. The BERT encoder obtains the second codes Y' according to Y, then obtains a distribution of the second codes through fitting based on a predetermined distribution type to obtain the second distribution parameter, and thereby determine the prior distribution $P(Z'|Y)$ of the second codes, where $Z'$ represents the second codes after processing Y through the BERT encoder. Since the second codes Z' corresponds to the first codes Z, $P(Z'|Y)$ may be regarded as understood as $P(Z|Y)$, i.e., the prior distribution of the first code Z.

In an embodiment, both the first distribution and the second distribution are normal distributions, i.e., $Q(Z|X) = N_1 (\mu_1(X),\Sigma_1(X))$, $P(Z|Y) = N_2(\mu_2(Y),\Sigma_2(Y))$.

In such case, the first distribution parameter comprises mean $\mu_1(X)$ and variance $\Sigma_1(X)$. Generally, the mean $\mu_1(X)$ and the variance $\Sigma_1(X)$ may be expressed as a vector, and each comprises elements of which a quantity is equal to a quantity of first samples x in the first sample group X. That is, every x corresponds to a variance and a mean. Similarly, the second distribution parameter comprises mean $\mu_1(X)$ and variance $\Sigma_1(X)$.

After obtaining the first distribution and the second distribution, the first degree of difference can be obtained. In this embodiment, the first degree of difference is the relative entropy of the first distribution and the second distribution, which is expressed as the Kullback-Leibler (KL) divergence. For example, the first difference function may be following equation:

$$L_1 = D_{KL}\big(Q(Z \mid X) \| P(Z \mid Y)\big)$$

$$(1).$$

$D_{KL}$ represents calculating the KL divergence. When both the first distribution and the second distribution are normal distributions, the equation (1) can be expressed as $L_1 = D_{KL}(N_1(\mu_1(X), \Sigma_1(X)) \| N_2(\mu_2(Y), \Sigma_2(Y)))$.

Then, a set Z of hidden variables corresponding to X may be obtained through sampling based on $N_1$. Y' is inputted into the decoder as a label, and the decoder is controlled to decode the hidden variables Z to obtain reconstructed X which is generated by the auto-encoder network, that is, the reconstructed sample group $f(Z,Y')$. During the decoding, the second code y' corresponding to each second sample y in Y' controls the reconstruction of the first sample x corresponding to the second sample y. Therefore, a quantity of reconstructed samples in $f(Z,Y')$ is identical to a quantity of first samples in X. In such case, the second degree of difference can be obtained. In this embodiment, the second degree of difference may be a mean square error between the first sample group and the reconstructed sample group. For example, the second difference function may be following equation:

$$L_2 = MSE(X, f(Z, Y')) = \left\| X - f(Z, Y') \right\|^2$$

$$(2).$$

MSE represents calculating a mean square error.

Therefore, the overall reconstruction loss L of the auto-encoder network may be expressed as following equation:

$$L = L_1 + L_2 = D_{KL}(Q(Z \mid X) \parallel P(Z \mid Y)) + \left\| X - f(Z, Y') \right\|^2$$

$$(3).$$

In the reconstruction loss, the constraint of the mean square error in $L_2$ helps the encoder in the VAE learn information (such as a prosody) useful for synthesizing information from the first sample group X, while the constraint of the KL divergence in $L_1$ ensures that the encoder in the VAE encoder is limited in probability distribution when learning the foregoing information. Although L is expressed as the sum of $L_1$ and $L_2$ in this example, the present disclosure is not limited thereto and another form of L may be feasible in practice, as long as L is in positive correlation with both $L_1$ and $L_2$. For example, L may be a product of $L_1$ and $L_2$, a weighting sum of $L_1$ and $L_2$, or the like.

After being obtained, the reconstruction loss L is fed back to the the auto-encoder network through gradient back-propagation, so as to adjust the first encoder, the second encoder, and the first decoder. In one embodiment, in order to avoid excessive restriction of the prior distribution on the posterior distribution, $L_1$ in the reconstruction loss L may be divided into two parts when participating in the gradient back-propagation, as shown in equation:

$$L = \alpha \cdot D_{KL}(Q(Z \mid X) \parallel sg(P(Z \mid Y))) + \beta \cdot D_{KL}(sg(Q(Z \mid X)) \parallel P(Z \mid Y)) + \left\| X - f(Z, Y') \right\|^2$$

$$(4).$$

$\alpha$ and $\beta$ represent weights of the two KL divergences, respectively, in $L_1$. The two KL divergences are equal except for different weights, and sg represents that the gradient breaking, i.e., not back-propagating the gradient. That is, the distribution in the brackets following sg is not affected by a change of the corresponding term of the gradient during the back-propagation. Therefore, the first term of KL divergence in the above equation determines how much the posterior distribution changes toward the prior distribution, and is back-propagated to the first encoder (i.e., the encoder in the VAE) while not to the second encoder (i.e., the BERT encoder) for parameter adjustment. The second term of KL divergence in the above equation determines how much the prior distribution changes toward the posterior distribution, and is back-propagated to the second encoder while not to the first encoder for parameter adjustment. The above three terms together form a co-training model of the reconstruction loss function. It is appreciated that a main objective of the first encoder during the training is learning a pattern from the first samples, so as to exploit the pattern fully to reconstructing a sample based on the input information in the information synthesis. Hence, a general requirement is that the prior distribution changes more toward the posterior distribution. Usually, there is $\alpha < \beta$, such as $10\alpha = \beta$, in order to ensure that a degree of the posterior distribution approximating the prior distribution is smaller than a degree the prior distribution approximating the posterior distribution.

There are at least two major differences between the above training and the training for conventional speech synthesis.

First, conventional speech synthesis (such as the Tacotron) adopts a simple codec module for predicting an output of a group. Generally, a decoding side need to predict a current speech frame $x_T$ according to context C which is encoded by an encoding side and a history speech frame sequence $x_1, x_2, ..., x_{T-1}$ which is obtained through decoding. That is, $x_T = \arg\max\left(\prod_{t=1}^{T} P_\theta(x_t \mid x_{t-1}, C)\right)$, where $P_\theta$ represents a conditional probability of a current speech frame given a previous speech frame. Usually, the utilized speech data contains a lot of noises and potential pronunciation errors, which increases data uncertainty greatly, and such data uncertainty is difficult to be described by using corresponding text. The simple codec model as mentioned above cannot cushion these noises and pronunciation errors, which brings great difficulties in model learning. In comparison, the first encoder (such as an encoding network in the VAE) herein can use the first distribution to simulate these noises and pronunciation errors, and even simulate a prosody that is usually difficult to model. Hence, besides the prosody from the history frame sequence and the context C, the hidden representation Z provided by the first encoder can be further utilized for learning the noises, pronunciation errors, and the prosody when predicting a speech frame. That is, the current speech frame can be approximately expressed as

$$x_T = \arg\max\left(\prod_{t=1}^{T} P_\theta\left(x_t \mid x_{t-1}, C, Z\right)\right)$$ , thereby reducing a difficulty in model learning. When the technical solutions of the present disclosure are applied to another scenario, the input information and output information may be other types of information. In such case, the above-mentioned history speech frame sequence may be replaced by corresponding history output information, and possible cases are not enumerated herein.

Second, although a traditional VAE model may assume a posterior distribution as a normal distribution, the prior distribution is usually set as the standard normal distribution, that is, $N(0,1)$ to predict the posterior distribution, which results in that inputs of the decoding side becomes zero or close to zero after predicting the posterior distribution. In such case, although a part of the noises can be removed, the prosody contained in the hidden representation Z would be lost, which results in poor prosodic fluctuations in a result of synthesis. In comparison, the second encoder herein is utilized encode the second samples, and then the posterior distribution is predicted by using the prior distribution obtained from the encoding. Since the prior distribution comprises features of text corresponding to a speech, the prosodic fluctuations are retained, thereby avoiding a loss of the prosody when removing the noises.

Hereinafter a process of speech synthesis in Figure 6 is illustrated. Such process is briefly indicated by the dotted box in Figure 6. During the speech synthesis, the first decoder (i.e., the encoder in the VAE) does not have real inputs, i.e., x, and hence the first distribution cannot be obtained from X as in the training. In such case, sampling is performed based on the first target distribution, which is predicted by using the prior distribution to sample to obtain the target sample code Z (that is, hidden representation Z). The target sample code Z and the target code Y', which is generated through the second encoder (i.e., the BERT encoder) encoding the text Y, are inputted into the decoder together, and thereby the speech $f(Z,Y')$ corresponding to Y is synthesized through the decoding. The target sampling code Z obtained through the sampling can still be regarded as the hidden representation of a speech signal. Since the second encoder processes text inputs, Z contains prosody and noises which cannot be obtained from processing of the second encoder. Therefore, what the posterior distribution learns from the prior distribution is mainly prosodic information predicted based on text, and the prosodic information can further suppress noises in the final synthesized speech.

Although Figure 6 shows an application scenario of speech synthesis, that is, speech information is generated based on text information, the method herein is applicable to other application scenarios. For example, picture information may be generated based on text information, speech information may be generated based on picture information, text information may generated based on speech information, or the like. When being applied to other scenarios, the first decoder, the second decoder, and the first encoder may adopt corresponding artificial neural network models.

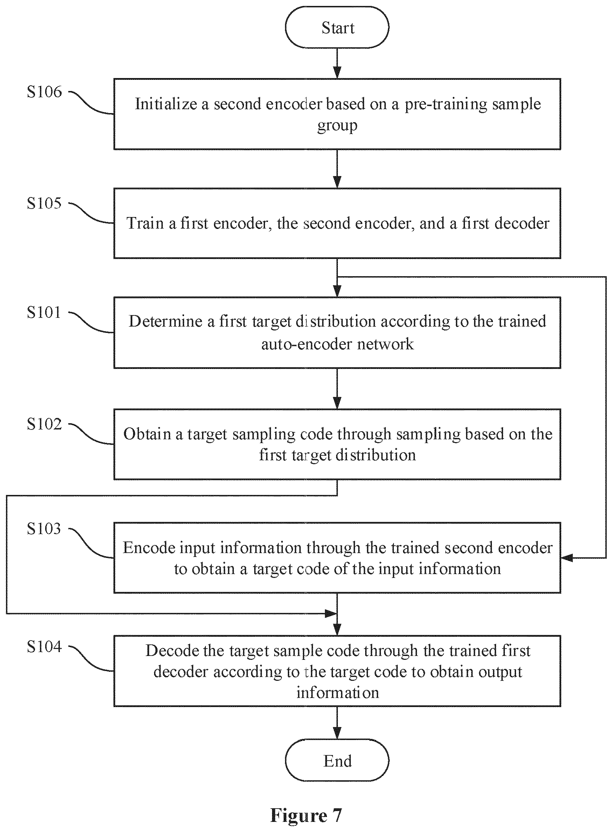

Hereinabove description is mainly based on the step S105, that is, the speech synthesis method comprises the corresponding training process. In some embodiments, in order to improve efficiency of the training and the speech synthesis, the second encoder may be pre-trained before training the overall auto-encoder network. Figure 7 is a schematic flowchart of a method for synthesizing information according to another embodiment of the present disclosure. As shown in Figure 7, on a basis of the method as shown in Figure 2, the method for synthesizing information further comprises a following step S106 before the step S105.

In step S106, the second encoder is initialized based on a pre-training sample group.

In this step, the pre-training sample group comprises one or more pre-training samples. Generally, a type of the pre-training samples is the same as a type of the input information. A quantity of the pre-training samples is large in order to initialize the parameters of the second encoder, increase its capability of understanding the input information and the second sample group, and improve reasonability of the prediction in the auto-encoder network. For example, the second encoder is a BERT model, and the pre-training sample group comprises a large number of text pieces which are easy to obtain. Hence, the prosody of the synthesized output information (e.g., in the speech synthesis) can be improved, which suppresses potential unreasonable sentence breaks and unreasonable pauses due to a lack of a front end in the synthesis.

Hereinafter multilingual speech synthesis is taken as an example for illustrating advantages of the method for synthesizing information according to embodiments of the present disclosure over conventional technology. Table 1 shows an evaluation result (measured in mean opinion scores, MOS) of speech synthesis service in the Google Translate and a speech synthesis system applying the method according to embodiments of the present disclosure (hereinafter called the Base system) under the same audiometry environment. Objects of the evaluation concerns naturalness (such as prosody and timbre) of synthesized speeches in six languages, i.e., Portuguese, Hindi, Indonesian, German, Italian and Malay.

Table 1 MOS between Google Translate and Base system

| Language | Google | Base |
| --- | --- | --- |
| Portuguese | 3.78 | 3.68 |
| Hindi | 3.85 | 2.99 |

(continued)

| Language | Google | Base |
|---|---|---|
| Indonesian | 3.03 | 3.94 |
| German | 3.4 | 3.76 |
| Italian | 3.33 | 4.02 |
| Malay | No speech service | 3.76 |
| Average | 3.48 | 3.69 |

Table 1 shows that a performance of the Base system is better than that of the Google Translate in speech synthesis, regardless a MOS on some single languages or an average MOS of the six languages.

In another aspect, an apparatus for synthesizing information is provided according to an embodiment of the present disclosure. The apparatus is applicable to an auto-encoder network including comprising a first encoder, a second encoder, and a first decoder. Details of the auto-encoder network may refer to the foregoing method embodiments, and are not repeated herein.

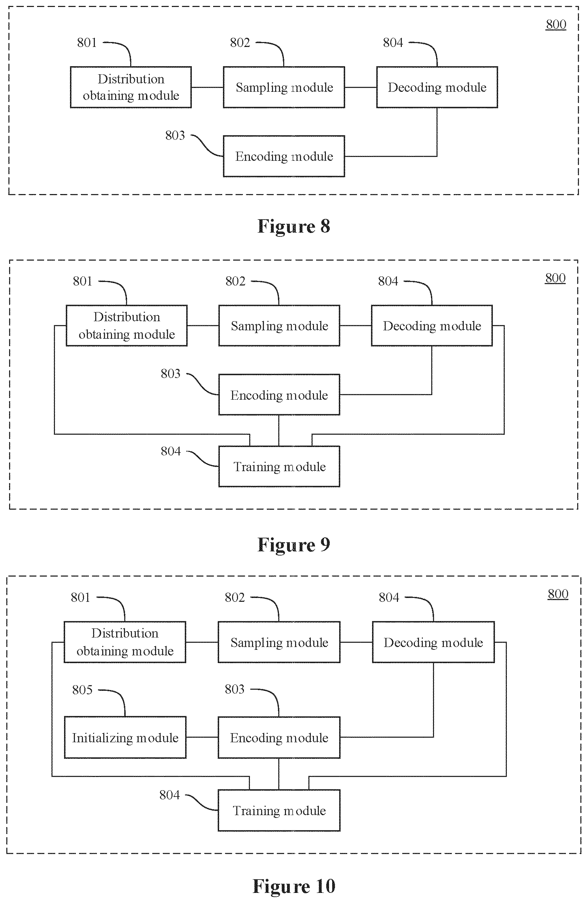

Hereinafter the apparatus is described in conjunction with Figure 8. Figure 8 is a schematic structural diagram of an apparatus for synthesizing information according to an embodiment of the present disclosure. As shown in Figure 8, the apparatus comprises a distribution obtaining module 801, a sampling module 802, an encoding module 803, and a decoding module 804.

The distribution acquisition module 801 is configured to determine a first target distribution according to a trained auto-encoder network obtained through training the auto-encoder network. The first target distribution characterizes a posterior distribution and is a probability distribution of an output of the first encoder given an input of the first encoder. In training of the auto-encoder network, samples inputted into the first encoder are in one-to-one correspondence to samples inputted into the second encoder, and a prior distribution determined by the second encoder is for predicting the first target distribution.

The sampling module 802 is configured to obtain a target sample code through sampling based on the first target distribution.

The encoding module 803 is configured to encode input information through a trained second coder, which is obtained through training the second encoder, to obtain a target code of the input information.

The decoding module 804 is configured to decode the target sample code through a trained first decoder, which is obtained through training the first decoder, according to the target code to obtain output information.

Figure 9 is a schematic structural diagram of an apparatus for synthesizing information according to another embodiment of the present disclosure. On a basis of the structure as shown in Figure 8, the apparatus further comprises a training module 805.

The training module 805 is configured to train the first encoder, the second encoder, and the first decoder to obtain a trained first encoder, the trained second encoder, and the trained first decoder, respectively.

In one embodiment, the training module 805 comprises an input unit and an adjusting unit.

The input unit is configured to input a first sample group and a second sample group into the auto-encoder network. The first sample group comprises first samples, each of which is of a same type as the output information. The second sample group comprises second samples, each of which is of a same type as the input information. The second samples are in one-to-one correspondence to the first samples.

The adjusting unit is configured to adjust parameters of the first encoder, the second encoder, and the first decoder until a reconstruction loss of the first sample group at the auto-encoder network meets a preset condition.

In an embodiment, the preset condition is the reconstruction loss reaching a minimum, or the reconstruction loss being smaller than a preset value.

In an embodiment, the reconstruction loss is obtained through following steps. A first distribution parameter is determined through the first encoder according to the first samples, where the first distribution parameter is configured to characterize a first distribution of first codes, which are obtained by encoding the first samples, respectively. Sample codes for the first samples are obtained based on the first distribution parameter. The second sample group is encoded through the second encoder to obtain second codes of the second samples. A second distribution parameter is obtained according to the second codes, where the second distribution parameter is configured to characterize a second distribution of the second codes, and the second codes of the second samples correspond to the first codes of the first samples, respectively. A first degree of difference between the first distribution and the second distribution is obtained based on the first distribution parameter and the second distribution parameter. The sample codes for the first samples are decoded through the first decoder according to the corresponding second codes, respectively, to obtain reconstructed samples of the first samples, where the reconstructed samples of the first samples form a reconstructed sample group. A second degree of difference between the first sample group and the reconstructed sample group is obtained according to the first sample group and the reconstructed sample group. The reconstruction loss is obtained based on the first degree of difference and the second degree of difference. When the reconstruction loss meets the preset condition, parameters of the first encoder serves as parameters of the trained first encoder and the first distribution serves as the first target distribution.

In an embodiment, the first degree of difference is relative entropy between the first distribution and the second distribution.

In an embodiment, during gradient back-propagation, a first part of the first degree of difference is back-propagated to the first encoder while not to the second encoder, and a second part of the first degree of difference is back-propagated to the second encoder while not to the first encoder, where the first part is smaller than the second part.

In an embodiment, the first distribution and the second distribution are probability distributions of a same type.

In an embodiment, the first distribution and the second distribution each is a normal distribution, and the first distribution parameter and the second distribution parameter each comprises a mean and a variance of the normal distribution.

Figure 10 is a schematic structural diagram of an apparatus for synthesizing information according to another embodiment of the present disclosure. On a basis of the structure as shown in Figure 9, the apparatus further comprising an initializing module 806.

The initializing module 806 is configured to initialize the second encoder based on a pre-training sample group, where each sample in the pre-training sample group is of a same type as the input information.

In an embodiment, the first encoder is an encoder of a CVAE, and the first decoder is a decoder of the CVAE.

In an embodiment, the second encoder is a BERT model.

According to the claimed invention, the input information is text, and the output information is a speech.

In one embodiment, the first decoder is configured to determine a current frame of the speech based on a decoded history frame sequence in the speech and a context in the text.

In one embodiment, when training the first encoder, the second encoder and the first decoder, no phoneme or manually extracted text feature is inputted into the first encoder and the second encoder.

The apparatus for synthesizing information is provided according to embodiments of the present disclosure. The first target distribution is determined according to the trained auto-encoder network, and the target sample code is obtained through sampling based on the first target distribution. The input information is encoded through the trained second encoder to obtain the target code of the input information. The target sample code is decoded through the trained first decoder according to the target code to obtain the output information. The first target distribution characterizes the posterior distribution and is the probability distribution of the output of the first encoder given the input of the first encoder. In training of the auto-encoder network, samples inputted into the first encoder are in one-to-one correspondence to samples inputted into the second encoder, and the prior distribution determined by the second encoder is for predicting the first target distribution. Thus, correspondence between the output information obtained through the decoding and the input information can highly approximate (or simulate) correspondence between the samples inputted into the first encoder and the samples inputted into the second encoder during the training, that is, the output information has a good correspondence to the input information. Thereby, a restriction on quality of speech samples is lessened in speech synthesis, especially in multilingual speech synthesis. A large number of training samples is eligible, and hence a final synthesized speech has better performances in prosody, pauses, and text-based pronunciation.

In another aspect, an electronic device is provided according to embodiments of the present disclosure. The electronic device comprises a memory and a processor. The memory stores instructions, and the instructions when executed by the processor configure the device to performing any forgoing method for synthesizing information.

In another aspect, a non-transitory computer-readable storage medium is provided according to an embodiment of the present disclosure. The storage medium stores instructions, and the instructions when executed by a processor implement any forgoing method for synthesizing information.

The computer readable storage medium includes program instructions, data files, data structure, etc., or a combination thereof. A program recorded in the computer readable storage medium may be programmed or configured to implement the method of the present disclosure. The computer readable storage medium further includes a hardware system for storing and executing the program instructions. The hardware system may be a magnetic medium (such as a hard disk, a floppy disk, and a magnetic tape), or an optical medium (such as a CD-ROM and a DVD), or a magneto-optical medium (such as a floppy optical disk, a ROM, a RAM, and a flash memory, etc.). The program includes assembly language codes or machine codes compiled by a compiler and higher-level language codes interpreted by an interpreter. The hardware system may be implemented with at least one software module to comply with the present disclosure.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation is possible within the scope of the appended claims.

The embodiments of the present disclosure are described in a progressive manner, and each embodiment places emphasis on the difference from other embodiments. Therefore, one embodiment can refer to other embodiments for the same or similar parts. Since the apparatuses disclosed in the embodiments correspond to the methods disclosed in the embodiments, the description of the apparatuses is simple, and reference may be made to the relevant part of the methods.

**Claims**

1.  A method for synthesizing information, comprising:

    determining (S101) a first target distribution according to a trained auto-encoder network obtained through training an auto-encoder network, wherein:

    the first target distribution characterizes a posterior distribution, wherein the posterior distribution represents a probability distribution of an output of a first encoder given an input of the first encoder, and
    in training of the auto-encoder network, samples inputted into the first encoder are in one-to-one correspondence to samples inputted into a second encoder, and a prior distribution determined by the second encoder is for predicting the first target distribution;

    obtaining (S102) a target sample code through sampling based on the first target distribution;
    encoding (S103) text information through the trained second encoder, which is obtained through training a second encoder, to obtain a target code of the text information; and
    decoding (S104) the target sample code through a trained first decoder, which is obtained through training a first decoder, according to the target code to obtain speech information.

2.  The method according to claim 1, further comprising:
    training (S105) the first encoder, the second encoder, and the first decoder to obtain a trained first encoder, the trained second encoder, and the trained first decoder, respectively.

3.  The method according to claim 2, wherein before training the first encoder, the second encoder, and the first decoder, the method further comprises:
    initializing (S106) the second encoder based on a pre-training sample group, wherein each sample in the pre-training sample group is of a same type as the text information.

4.  The method according to claim 2, wherein training (S105) the first encoder, the second encoder, and the first decoder comprises:

    inputting (S1051) a first sample group and a second sample group into an auto-encoder network, wherein:

    the first sample group comprises first samples, each of which is of a same type as the speech information,
    the second sample group comprises second samples, each of which is of a same type as the text information, and
    the second samples are in one-to-one correspondence to the first samples; and

    adjusting (S1052, S1053) parameters of the first encoder, the second encoder, and the first decoder until a reconstruction loss of the first sample group at the auto-encoder network meets a preset condition.

5.  The method according to claim 4, wherein adjusting the parameters of the first encoder, the second encoder, and the first decoder until the reconstruction loss of the first sample group at the auto-encoder network meets the preset condition comprises:

    determining a first distribution parameter through the first encoder according to the first samples, wherein the first distribution parameter is configured to characterize a first distribution of first codes, which are obtained by encoding the first samples, respectively;
    obtaining sample codes for the first samples based on the first distribution parameter; encoding the second sample group through the second encoder, to obtain second codes of the second samples;

obtaining a second distribution parameter according to the second codes, wherein the second distribution parameter is configured to characterize a second distribution of the second codes, and the second codes of the second samples correspond to the first codes of the first sample, respectively;

obtaining a first degree of difference between the first distribution and the second distribution based on the first distribution parameter and the second distribution parameter;

decoding the sample codes for the first samples through the first decoder according to the corresponding second codes, respectively, to obtain reconstructed samples of the first samples, wherein the reconstructed samples of the first samples form a reconstructed sample group;

obtaining a second degree of difference between the first sample group and the reconstructed sample group according to the first sample group and the reconstructed sample group; and

obtaining the reconstruction loss based on the first degree of difference and the second degree of difference; wherein the method further comprises: determining, parameters of the first encoder to serve as parameters of the trained first encoder and determining the first distribution to serve as the first target distribution, when the reconstruction loss meets the preset condition.

6. The method according to claim 4, wherein the preset condition is the reconstruction loss reaching a minimum, or the reconstruction loss being smaller than a preset value.

7. The method according to claim 5, wherein when adjusting the parameters of the first encoder, the second encoder, and the first decoder until the reconstruction loss meets the preset condition, the method further comprises:

during gradient back-propagation,
back-propagating a first part of the first degree of difference to the first encoder while not to the second encoder, and
back-propagating a second part of the first degree of difference to the second encoder while not to the first encoder, wherein the first part is smaller than the second part.

8. The method according to claim 5, wherein the first distribution and the second distribution are probability distributions of a same type.

9. The method according to any one of claims 1 to 8, wherein the first encoder is an encoder of a conditional variational autoencoder, and the first decoder is a decoder of the conditional variational autoencoder.

10. The method according to any one of claims 1 to 8, wherein the second encoder is a model of bidirectional encoder representations from transformers.

11. The method according to any one of claims 1 to 8, wherein the first decoder is configured to determine a current frame of the speech based on a decoded history frame sequence in the speech and a context in the text.

12. The method according to any one of claims 1 to 8, wherein when training the first encoder, the second encoder and the first decoder, no phoneme or manually extracted text feature is inputted into the first encoder and the second encoder.

13. An electronic device, comprising a memory and a processor, wherein:
the memory stores instructions, and the instructions when executed by the processor configured the electronic device to perform the method according to any one of claims 1 to 12.

14. A non-transitory computer-readable storage medium, storing instructions, wherein:
the instructions when executed by a processor implement the method according to any one of claims 1 to 12.

**Patentansprüche**

1. Verfahren zur Synthetisierung von Informationen, das Folgendes umfasst:

Bestimmen (S101) einer ersten Zielverteilung entsprechend einem trainierten Autoencoder-Netzwerk, das durch Trainieren eines Autoencoder-Netzwerks erhalten wird, wobei:

die erste Zielverteilung eine A-posteriori-Verteilung kennzeichnet, wobei die A-posteriori-Verteilung eine Wahrscheinlichkeitsverteilung einer Ausgabe eines ersten Encoders bei einer Eingabe des ersten Encoders darstellt, und

beim Trainieren des Autoencoder-Netzwerks in den ersten Encoder eingegebene Stichproben in eineindeutiger Beziehung zu in einen zweiten Encoder eingegebenen Stichproben stehen und eine vom zweiten Encoder bestimmte A-priori-Verteilung zum Vorhersagen der ersten Zielverteilung dient,

Gewinnen (S102) eines Ziel-Stichprobencodes durch Stichprobenentnahme auf der Grundlage der ersten Zielverteilung,

Codieren (S103) von Textinformationen über den trainierten zweiten Encoder, der durch Trainieren eines zweiten Encoders erhalten wird, um einen Zielcode der Textinformationen zu gewinnen, und

Decodieren (S104) des Ziel-Stichprobencodes über einen trainierten ersten Decoder, der durch Trainieren eines ersten Decoders erhalten wird, entsprechend dem Zielcode, um Sprachinformationen zu gewinnen.

2. Verfahren nach Anspruch 1, das ferner Folgendes umfasst:
Trainieren (S105) des ersten Encoders, des zweiten Encoders und des ersten Decoders, um einen trainierten ersten Encoder, den trainierten zweiten Encoder bzw. den trainierten ersten Decoder zu erhalten.

3. Verfahren nach Anspruch 2, wobei das Verfahren vor dem Trainieren des ersten Encoders, des zweiten Encoders und des ersten Decoders ferner Folgendes umfasst:
Initialisieren (S106) des zweiten Encoders auf der Grundlage einer Vor-Trainings-Stichprobengruppe, wobei jede Stichprobe in der Vor-Trainings-Stichprobengruppe von einem gleichen Typ wie die Textinformationen ist.

4. Verfahren nach Anspruch 2, wobei das Trainieren (S105) des ersten Encoders, des zweiten Encoders und des ersten Decoders Folgendes umfasst:

Eingeben (S1051) einer ersten Stichprobengruppe und einer zweiten Stichprobengruppe in ein Autoencoder-Netzwerk, wobei:

die erste Stichprobengruppe erste Stichproben umfasst, von denen jede von einem gleichen Typ wie die Sprachinformationen ist,
die zweite Stichprobengruppe zweite Stichproben umfasst, von denen jede von einem gleichen Typ wie die Textinformationen ist, und
die zweiten Stichproben in eineindeutiger Beziehung zu den ersten Stichproben stehen, und

Einstellen (S1052, S1053) von Parametern des ersten Encoders, des zweiten Encoders und des ersten Decoders, bis ein Rekonstruktionsverlust der ersten Stichprobengruppe am Autoencoder-Netzwerk eine vorgegebene Bedingung erfüllt.

5. Verfahren nach Anspruch 4, wobei das Einstellen der Parameter des ersten Encoders, des zweiten Encoders und des ersten Decoders, bis der Rekonstruktionsverlust der ersten Stichprobengruppe am Autoencoder-Netzwerk die vorgegebene Bedingung erfüllt, Folgendes umfasst:

Bestimmen eines ersten Verteilungsparameters über den ersten Encoder entsprechend den ersten Stichproben, wobei der erste Verteilungsparameter so gestaltet ist, dass er eine erste Verteilung erster Codes kennzeichnet, die durch jeweiliges Codieren der ersten Stichproben gewonnen werden,
Gewinnen von Stichprobencodes für die ersten Stichproben auf der Grundlage des ersten Verteilungsparameters, Codieren der zweiten Stichprobengruppe über den zweiten Encoder zur Gewinnung zweiter Codes der zweiten Stichproben,
Gewinnen eines zweiten Verteilungsparameters entsprechend den zweiten Codes, wobei der zweite Verteilungsparameter so gestaltet ist, dass er eine zweite Verteilung der zweiten Codes kennzeichnet, und die zweiten Codes der zweiten Stichproben jeweils den ersten Codes der ersten Stichprobe entsprechen,
Gewinnen eines ersten Differenzgrades zwischen der ersten Verteilung und der zweiten Verteilung auf der Grundlage des ersten Verteilungsparameters und des zweiten Verteilungsparameters,
Decodieren der Stichprobencodes für die ersten Stichproben über den ersten Decoder jeweils gemäß den entsprechenden zweiten Codes, um rekonstruierte Stichproben der ersten Stichproben zu gewinnen, wobei die rekonstruierten Stichproben der ersten Stichproben eine rekonstruierte Stichprobengruppe bilden,
Gewinnen eines zweiten Differenzgrades zwischen der ersten Stichprobengruppe und der rekonstruierten Stichprobengruppe entsprechend der ersten Stichprobengruppe und der rekonstruierten Stichprobengruppe, und

Gewinnen des Rekonstruktionsverlusts anhand des ersten Differenzgrades und des zweiten Differenzgrades, wobei das Verfahren ferner Folgendes umfasst: Bestimmen von Parametern des ersten Encoders, die als Parameter des trainierten ersten Encoders dienen sollen, und Bestimmen der ersten Verteilung, die als erste Zielverteilung dienen soll, wenn der Rekonstruktionsverlust die vorgegebene Bedingung erfüllt.

6. Verfahren nach Anspruch 4, wobei die vorgegebene Bedingung darin besteht, dass der Rekonstruktionsverlust ein Minimum erreicht oder der Rekonstruktionsverlust kleiner als ein vorgegebener Wert ist.

7. Verfahren nach Anspruch 5, wobei beim Einstellen der Parameter des ersten Encoders, des zweiten Encoders und des ersten Decoders, bis der Rekonstruktionsverlust die vorgegebene Bedingung erfüllt, das Verfahren ferner Folgendes umfasst:

während der Gradientenrückwärtspropagierung
Rückwärtspropagieren eines ersten Teils des ersten Differenzgrades zum ersten Encoder, nicht jedoch zum zweiten Encoder, und
Rückwärtspropagieren eines zweiten Teils des ersten Differenzgrades zum zweiten Encoder, nicht jedoch zum ersten Encoder, wobei der erste Teil kleiner als der zweite Teil ist.

8. Verfahren nach Anspruch 5, wobei die erste Verteilung und die zweite Verteilung Wahrscheinlichkeitsverteilungen eines gleichen Typs sind.

9. Verfahren nach einem der Ansprüche 1 bis 8, wobei der erste Encoder ein Encoder eines bedingten Variationsautoencoders ist und der erste Decoder ein Decoder des bedingten Variationsautoencoders ist.

10. Verfahren nach einem der Ansprüche 1 bis 8, wobei der zweite Encoder ein Modell bidirektionaler Encoder-Darstellungen aus Transformatoren ist.

11. Verfahren nach einem der Ansprüche 1 bis 8, wobei der erste Decoder so ausgebildet ist, dass er einen aktuellen Rahmen der Sprache auf der Grundlage einer decodierten historischen Rahmenabfolge in der Sprache und eines Kontexts im Text ermittelt.

12. Verfahren nach einem der Ansprüche 1 bis 8, wobei beim Trainieren des ersten Encoders, des zweiten Encoders und des ersten Decoders kein Phonem oder manuell extrahiertes Textmerkmal in den ersten Encoder und den zweiten Encoder eingegeben wird.

13. Elektronische Vorrichtung, die einen Speicher und einen Prozessor umfasst, wobei:
der Speicher Befehle speichert und die Befehle bei Ausführung durch den Prozessor die elektronische Vorrichtung so einrichten, dass sie das Verfahren nach einem der Ansprüche 1 bis 12 ausführt.

14. Nichtflüchtiges, computerlesbares Speichermedium, das Befehle speichert, wobei:
die Befehle bei Ausführung durch einen Prozessor das Verfahren nach einem der Ansprüche 1 bis 12 durchführen.

**Revendications**

1. Procédé de synthèse d'informations, comprenant :

la détermination (S101) d'une première distribution cible selon un réseau auto-encodeur entraîné obtenu par l'entraînement d'un réseau auto-encodeur :

la première distribution cible caractérisant une distribution a posteriori, la distribution a posteriori représentant une distribution de probabilité d'une sortie d'un premier encodeur étant donné une entrée du premier encodeur, et
dans l'entraînement du réseau auto-encodeur, les échantillons entrés dans le premier encodeur étant en correspondance biunivoque avec des échantillons entrés dans un deuxième encodeur, et une distribution a priori déterminée par le deuxième encodeur servant à prédire la première distribution cible,

l'obtention (S102) d'un code d'échantillon cible par échantillonnage basé sur la première distribution cible,
l'encodage (S103) d'informations textuelles au moyen du deuxième encodeur entraîné obtenu par l'entraînement d'un deuxième encodeur, afin d'obtenir un code cible des informations textuelles, et
le décodage (S104) du code d'échantillon cible au moyen d'un premier décodeur entraîné obtenu par l'entraînement d'un premier décodeur, conformément au code cible, afin d'obtenir des informations vocales.

2. Procédé selon la revendication 1, comprenant en outre :
l'entraînement (S105) du premier encodeur, du deuxième encodeur et du premier décodeur pour obtenir respectivement un premier encodeur entraîné, le deuxième encodeur entraîné et le premier décodeur entraîné.

3. Procédé selon la revendication 2, dans lequel, avant l'entraînement du premier encodeur, du deuxième encodeur et du premier décodeur, le procédé comprend en outre :
l'initialisation (S106) du deuxième encodeur sur la base d'un groupe d'échantillons de pré-entraînement, chaque échantillon dans le groupe d'échantillons de pré-entraînement étant du même type que les informations textuelles.

4. Procédé selon la revendication 2, dans lequel l'entraînement (S105) du premier encodeur, du deuxième encodeur et du premier décodeur comprend :

l'entrée (S1051) d'un premier groupe d'échantillons et d'un deuxième groupe d'échantillons dans un réseau auto-encodeur :

le premier groupe d'échantillons comprenant des premiers échantillons, chacun étant d'un même type que les informations vocales,
le deuxième groupe d'échantillons comprenant des deuxièmes échantillons, chacun étant d'un même type que les informations textuelles, et
les deuxièmes échantillons étant en correspondance biunivoque avec les premiers échantillons, et

l'ajustement (S1052, S1053) de paramètres du premier encodeur, du deuxième encodeur et du premier décodeur jusqu'à ce que la perte de reconstruction du premier groupe d'échantillons au niveau du réseau auto-encodeur satisfait à une condition prédéfinie.

5. Procédé selon la revendication 4, dans lequel l'ajustement des paramètres du premier encodeur, du deuxième encodeur et du premier décodeur jusqu'à ce que la perte de reconstruction du premier groupe d'échantillons au niveau du réseau auto-encodeur satisfait à la condition prédéfinie comprend :

la détermination d'un premier paramètre de distribution par le premier encodeur conformément aux premiers échantillons, le premier paramètre de distribution étant configuré pour caractériser une première distribution de premiers codes obtenus en encodant respectivement les premiers échantillons,
l'obtention de codes d'échantillons pour les premiers échantillons sur la base du premier paramètre de distribution, l'encodage du deuxième groupe d'échantillons par le deuxième encodeur, afin d'obtenir des deuxièmes codes des deuxièmes échantillons,
l'obtention d'un deuxième paramètre de distribution conformément aux deuxièmes codes, le deuxième paramètre de distribution étant configuré pour caractériser une deuxième distribution des deuxièmes codes, et les deuxièmes codes des deuxièmes échantillons correspondant respectivement aux premiers codes du premier échantillon,
l'obtention d'un premier degré de différence entre la première distribution et la deuxième distribution sur la base du premier paramètre de distribution et du deuxième paramètre de distribution,
le décodage des codes d'échantillons pour les premiers échantillons au moyen du premier décodeur conformément aux deuxièmes codes correspondants, respectivement, afin d'obtenir des échantillons reconstruits des premiers échantillons, les échantillons reconstruits des premiers échantillons formant un groupe d'échantillons reconstruits,
l'obtention d'un deuxième degré de différence entre le premier groupe d'échantillons et le groupe d'échantillons reconstruits conformément au premier groupe d'échantillons et au groupe d'échantillons reconstruits, et
l'obtention de la perte de reconstruction sur la base du premier degré de différence et du deuxième degré de différence,
le procédé comprenant en outre : la détermination de paramètres du premier encodeur pour servir de paramètres du premier encodeur entraîné et la détermination de la première distribution pour servir de première distribution cible, lorsque la perte de reconstruction satisfait à la condition prédéfinie.

6. Procédé selon la revendication 4, dans lequel la condition prédéfinie consiste en ce que la perte de reconstruction atteint un minimum ou la perte de reconstruction est inférieure à une valeur prédéfinie.

7. Procédé selon la revendication 5, dans lequel, lors de l'ajustement des paramètres du premier encodeur, du deuxième encodeur et du premier décodeur jusqu'à ce que la perte de reconstruction satisfait à la condition prédéfinie, le procédé comprend en outre :

   pendant la rétropropagation du gradient,
   la rétropropagation d'une première partie du premier degré de différence vers le premier encodeur, mais pas vers le deuxième encodeur, et
   la rétropropagation d'une deuxième partie du premier degré de différence vers le deuxième encodeur, mais pas vers le premier encodeur, la première partie étant inférieure à la deuxième partie.

8. Procédé selon la revendication 5, dans lequel la première distribution et la deuxième distribution sont des distributions de probabilité d'un même type.

9. Procédé selon l'une des revendications 1 à 8, dans lequel le premier encodeur est un encodeur d'un auto-encodeur variationnel conditionnel, et le premier décodeur est un décodeur de l'auto-encodeur variationnel conditionnel.

10. Procédé selon l'une des revendications 1 à 8, dans lequel le deuxième encodeur est un modèle de représentations d'encodeur bidirectionnelles à partir de transformateurs.

11. Procédé selon l'une des revendications 1 à 8, dans lequel le premier décodeur est réalisé de manière à déterminer un cadre actuel de la parole sur la base d'une séquence de cadres historiques décodés dans la parole et d'un contexte dans le texte.

12. Procédé selon l'une des revendications 1 à 8, dans lequel, lors de l'entraînement du premier encodeur, du deuxième encodeur et du premier décodeur, aucun phonème ou aucune caractéristique textuelle extraite manuellement n'est entré(e) dans le premier encodeur et le deuxième encodeur.

13. Dispositif électronique comprenant une mémoire et un processeur, dans lequel :
    la mémoire stocke des instructions, et les instructions, lors de l'exécution par le processeur, configurent le dispositif électronique pour réaliser le procédé selon l'une des revendications 1 à 12.

14. Support de stockage non transitoire lisible par ordinateur, stockant des instructions, dans lequel :
    les instructions, lors de l'exécution par un processeur, mettent en œuvre le procédé selon l'une des revendications 1 à 12.

Start

S101 Determine a first target distribution according to a trained auto-encoder network

S102 Obtain a target sampling code through sampling based on the first target distribution

S103 Encode input information through a trained second encoder to obtain a target code of the input information

S104 Decode the target sample code through a trained first decoder according to the target code to obtain output information

End

**Figure 1**

Start

S105 — Train a first encoder, a second encoder, and a first decoder

S101 — Determine a first target distribution according to the trained auto-encoder network

S102 — Obtain a target sampling code through sampling based on the first target distribution

S103 — Encode input information through the trained second encoder to obtain a target code of the input information

S104 — Decode the target sample code through the trained first decoder according to the target code to obtain output information

End

**Figure 2**

Start

S1051 — Input a first sample group and a second sample group into the auto-encoder network

S1053 — Adjust parameters of a first encoder, a second encoder, and a first decoder

No

S1052 — Determine whether a reconstruction loss of the first sample group at the auto-encoder network meets a preset condition

Yes

S101 — Determine a first target distribution according to the trained auto-encoder network

S102 — Obtain a target sampling code through sampling based on the first target distribution

S103 — Encode input information through the trained second encoder to obtain a target code of the input information

S104 — Decode the target sample code through the trained first decoder according to the target code to obtain output information

End

**Figure 3**

**Figure 4**

Output information

First decoder

Target sample code

Target code

First target distribution

Second encoder

First encoder

Input information

**Figure 5**

Figure 6

Start

S106 — Initialize a second encoder based on a pre-training sample group

S105 — Train a first encoder, the second encoder, and a first decoder

S101 — Determine a first target distribution according to the trained auto-encoder network

S102 — Obtain a target sampling code through sampling based on the first target distribution

S103 — Encode input information through the trained second encoder to obtain a target code of the input information

S104 — Decode the target sample code through the trained first decoder according to the target code to obtain output information

End

**Figure 7**

801
Distribution obtaining module

802
Sampling module

804
Decoding module

803
Encoding module

800

**Figure 8**

801
Distribution obtaining module

802
Sampling module

804
Decoding module

803
Encoding module

804
Training module

800

**Figure 9**

801
Distribution obtaining module

802
Sampling module

804
Decoding module

805
Initializing module

803
Encoding module

804
Training module

800

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011624655

- EP 3376497 A1

**Non-patent literature cited in the description**

- Hierarchical Multi-Grained Generative Model for Expressive Speech Synthesis. **YUKIYA HONO et al.** ARXIV.ORG. CORNELL UNIVERSITY LIBRARY, 17 September 2020